# EUROPÄISCHE PATENTSCHRIFT

(11) **EP 0 698 157 B1**
(45) Veröffentlichungstag und Bekanntmachung des Hinweises auf die Patenterteilung: **24.10.2001**
(21) Anmeldenummer: 94917621.8
(22) Anmeldetag: 11.05.1994
(51) Int. Cl.: E03C 1/04, G05D 23/13

(54) **SANITÄRE MISCHBATTERIE MIT THERMOSTATREGELUNG**
THERMOSTAT-REGULATED SANITARY MIXING TAP
ROBINET MELANGEUR SANITAIRE REGLE PAR THERMOSTAT

(30) Priorität: 12.05.1993 DE 4315702; 22.07.1993 DE 4324547
(43) Veröffentlichungstag der Anmeldung: 28.02.1996
(73) Patentinhaber: Ideal-Standard GmbH & Co. OHG, 53121 Bonn (DE)
(72) Erfinder: BERGMANN, Konrad, D-54516 Wittlich (DE)
(74) Vertreter: Gesthuysen, Hans Dieter, Dipl.-Ing.
(86) Internationale Anmeldenummer: EP9401529
(87) Internationale Veröffentlichungsnummer: WO9426989

(56) Entgegenhaltungen:
- DE-A- 3 505 966
- DE-A- 4 027 499
- DE-A- 4 120 024
- FR-A- 2 258 574
- US-A- 4 991 625

## Beschreibung

Die Erfindung betrifft ein Thermostatventil mit einem Steuer- und Regelkolben, mit einem den Steuer- und Regelkolben radial umgebenden Temperatursteuer- und -regelblock, der insbesondere als radial den Steuer- und Regelkolben umgebender Abschnitt des Termostatventilgehäuses ausgebildet ist, mit einem mit dem Steuer- und Regelkolben zusammenwirkenden temperaturabhängigen Regelelement, mit einem Betätigungselement und mit einem oder zwei den Steuer- und Regelkolben in Richtung auf das Regelelement belastenden Rückstellfederelement(en), wobei der Steuer- und Regelkolben zur Temperatursteuerung relativ zum Temperatursteuer- und -regelblock in eine temperaturbestimmende Ausgangslage einstellbar und zur Temperaturregelung mittels des Regelelementes regelbar ist. Weiterhin betrifft die Erfindung eine sanitäre Mischbatterie mit einer Thermostatsteuerung, einem Kaltwasserzulauf, einem Warmwasserzulauf, einem Mischwasserauslauf und einem Betätigungshebel, wobei der Kaltwasserringraum und ein benachbarter Warmwasserringsraum vorgesehen sind.

Während die sanitäre Mischbatterie mit einer Thermostatsteuerung, von der die Erfindung ausgeht, z. B. aus der DE - A - 41 20 024 bekannt ist, ist das Thermostatventil, von dem die Erfindung ebenfalls ausgeht, für sich ganz allgemein im Sanitär- und Heizungsbereich seit vielen Jahren bekannt.

Die bekannte sanitäre Mischbatterie, von der die Erfindung ausgeht, ist im übrigen mit einer feststehenden Ventilsitzscheibe, mit einer auf der Ventilsitzscheibe zur Mengensteuerung verschiebbaren Ventilscheibe und mit einem mit der Ventilscheibe zur Temperatursteuerung und -regelung zusammenwirkenden Temperatursteuer- und -regelblock versehen, wobei der Temperatursteuer- und -regelblock eine Einrichtung darstellt, die den Steuer- und Regelkolben umgibt. Insbesondere bei dem Thermostatventil, von dem die Erfindung ausgeht, kann der Temperatursteuer- und -regelblock als den Steuer- und Regelkolben umgebende Einrichtung auch als Teil des Thermostatventilgehäuses ausgebildet sein.

Im übrigen gehört zu sanitären Mischbatterien der hier in Rede stehenden Art ein - von außen zugänglicher - Betätigungshebel und ein mit dem Betätigungshebel - wie auch immer - verbundener Steuerhebel, so daß über den von außen zugänglichen Betätigungshebel und den damit verbundenen Steuerhebel in das Innere der sanitären Mischbatterie steuernd eingegriffen werden kann.

Für sanitäre Mischbatterien der hier in Rede stehenden Art gilt regelmäßig, daß die Ventilsitzscheibe eine mit dem Kaltwasserzulauf in Verbindung stehende Kaltwassereinlauföffnung und eine mit dem Warmwasserzulauf in Verbindung stehende Warmwassereinlauföffnung aufweist, daß in der Ventilscheibe mit der Kaltwassereinlauföffnung der Ventilsitzscheibe und der Warmwassereinlauföffnung der Ventilsitzscheibe kommunizierende Durchtrittsöffnungen verwirklicht sind und daß der Temperatursteuer- und -regelblock mit den Durchtrittsöffnungen der Ventilscheibe kommunizierende Kalt- und Warmwassereintrittsöffnungen sowie einen Kaltwasserringraum und einen Warmwasserringraum aufweist. Zwischen dem Temperatursteuer- und -regelblock, d. h. zwischen dem Kaltwasserringraum und dem Warmwasserringraum, ist ein Steuer- und Anschlagbund vorgesehen, wobei der Steuer- und Regelkolben hülsenförmig ausgeführt ist und eine Kaltwassersteuerkante und - mit Abstand zu der Kaltwassersteuerkante - eine Warmwassersteuerkante aufweist und der Steuer- und Anschlagbund eine Breite hat, die geringer ist als der Abstand zwischen der Kaltwassersteuerkante und der Warmwassersteuerkante, und in den Zwischenraum zwischen der Kaltwassersteuerkante und der Warmwassersteuerkante ragt.

Bei der bekannten, zuvor beschriebenen sanitären Mischbatterie, von der die Erfindung ausgeht, sind zwischen dem Temperatursteuer- und regelblock und dem Steuer- und Regelkolben nur schwach oder nicht vorgespannte O-Ringe vorgesehen, die in entsprechenden Nuten des Temperatursteuer- und -regelblocks aufgenommen sind. Diese Art der Abdichtung zwischen dem Temperatursteuer und -regelblock sowie dem Steuer- und Regelkolben beruht auf dem Gedanken, daß eine hundertprozentige Abdichtung an diesen Stellen nicht erforderlich ist, wenn bereits eine ausreichende Abdichtung zwischen der Ventilsitzscheibe und der Ventilscheibe einerseits sowie dem Temperatursteuer- und -regelblock und der Ventilscheibe andererseits gegeben ist.

Bei der bekannten Mischbatterie können aufgrund ihres Aufbaus als Einhebel-Mischbatterie in einfacher Weise die Menge und die Temperatur eingestellt werden.

Weiterhin ist auch eine relativ gute Temperaturregelung wegen des innerhalb des Temperatursteuer- und -regelblocks leicht verschieblichen Steuer- und Regelkolbens möglich. Insgesamt stellt diese Mischbatterie bereits eine relativ befriedigende Lösung dar. Allerdings ist festgestellt worden, daß es aufgrund der geringen Abdichtung zwischen dem Temperatursteuer und -regelblock und dem Steuer- und Regelkolben zu - wenn auch geringen - Leckströmungen aus dem Kaltwasserringraum einerseits und dem Warmwasserringraum andererseits kommen kann, was jedoch nicht erwünscht ist, da hierdurch ggf. der durch die Temperaturregelung bewirkte Effekt bzw. die eingestellte und/oder eingeregelte Mischtemperatur nachteilig beeinflußt werden kann.

Aus der DE - A - 36 12 988 ist eine weitere Mischbatterie bekannt, die in ähnlicher Weise wie die gattungsgemäße Mischbatterie funktioniert. Hierbei ist jedoch kein Steuer- und Anschlagbund zwischen dem Kaltwasserringraum und dem Warmwasserringraum vorgesehen. Bei dieser Mischbatterie ist der Steuer- und Regelkolben ebenfalls hülsenförmig ausgebildet, wobei der Abstand zwischen der Kaltwassersteuerkante und der Warmwassersteuerkante größer ist als die Längsausdehnung des Steuer- und Regelkolbens, so daß sich dieser, die Zuflußspalte für Kaltwasser und Warmwasser gegensinnig im Querschnitt verändernd, zwischen den beiden Steuerkanten zur Regelung der Mischwassertemperatur bewegt. Es kann jedoch auch der Abstand zwischen der Kaltwassersteuerkante und der Warmwassersteuerkante kleiner sein als die Längsausdehnung des Steuer- und Regelkolbens. Hierbei übergreift der Steuer- und Regelkolben die beiden Steuerkanten und bewegt sich ebenfalls, die Zuflußspalte für Kalt- und Warmwasser gegensinnig im Querschnitt verändernd, zur Regelung der Mischwassertemperatur hin und her. In beiden Fällen sind der Kaltwasserringraum und der Warmwasserringraum über O-Ringe abgedichtet. Ist hierbei die Dichtwirkung durch die O-Ringe hoch, so ergeben sich zwar keine oder kaum Leckströmungen vom Kaltwasserringraum zum Warmwasserringraum und umgekehrt, allerdings reagiert der Steuer- und Regelkolben dann erst auf größere Temperaturschwankungen, da bei kleineren Temperaturschwankungen auch nur kleinere Regelkräfte durch das Regelelement erzeugt werden, welche die durch die O-Ringe erzeugte Reibkraft nicht überwinden können. Wird hingegen nur eine schwache Abdichtung verwirklicht, kann es zu unerwünschten Vermischungen von Kalt- und Warmwasser kommen. Die vorgenannten Nachteile gelten selbstverständlich auch für Thermostatventile, die nach dem genannten Steuer- und Regelverfahren arbeiten.

Eine an alle sanitären Mischbatterien zu stellende Forderung besteht grundsätzlich darin, diese so kleinbauend wie irgend möglich herzustellen. Obwohl die gattungsgemäße Mischbatterie im Vergleich zu derzeit auf dem Markt befindlichen Mischbatterien bereits höchsten Ansprüchen in bezug auf Abmaße bzw. Baugröße genügt, wird jedoch ständig nach neuen Lösungen gesucht, um die Abmaße der Mischbatterie weiter zu verringern. Selbstverständlich gilt diese Forderung auch für Thermostatventile, die in Mischbatterien, aber auch für sich zur Anwendung kommen.

Aufgabe der Erfindung ist es daher, ein Thermostatventil und eine Mischbatterie der eingangs genannten Art zur Verfügung zu stellen, welche extrem geringe Abmaße haben und bei welchen die eingestellte und/oder eingeregelte Mischwassertemperatur unbeeinflußt von Leckströmungen sind.

Die zuvor hergeleitete Aufgabe ist bei dem eingangs beschriebenen Thermostatventil dadurch gelöst, daß das/die Rückstellfederelement(e) zwischen dem Temperatursteuer- und -regelblock und dem Steuer- und Regelkolben angeordnet ist/sind und sich einerseits am Temperatursteuer- und -regelblock, vorzugsweise auf dessen Innenmantelfläche, und andererseits auf der Außenmantelfläche des Steuer- und Regelkolbens abstützt/abstützen. Bei der eingangs beschriebenen Mischbatterie ist die zuvor hergeleitete Aufgabe dadurch gelöst, daß die Thermostatsteuerung ein Thermostatventil der zuvor genannten Art aufweist.

Statt der bekannten axialen Anordnung des Rückstellfederelementes, das beim Stand der Technik auf eine axiale, innerhalb des Steuer- und Regelkolbens liegende vordere Stirnseite wirkt, ist das Rückstellfederelement nun so angeordnet, daß es den Steuer- und Regelkolben außen umgibt. Das bedeutet mit anderen Worten, daß das Rückstellfederelement innerhalb der Längserstreckung des Steuer- und Regelkolbens angeordnet ist und nicht mehr über diesen in Längs- bzw. Bewegungsrichtung überstehen muß, um sich abzustützen. Der Vorteil dieser neuartigen Anordnung besteht darin, daß die Breite der erfindungsgemäßen Mischbatterie nunmehr gegenüber der bekannten Mischbatterie noch weiter verringert werden kann, da sich das Rückstellfederelement jetzt direkt am Temperatursteuer- und -regelblock abstützt, so daß die Ausbildung eines separaten Abstützflansches für das Rückstellfederelement, wie beim Stand der Technik üblich, nicht mehr erforderlich ist. Die genannten Vorteile treten selbstverständlich auch bei einem erfindungsgemäßen Thermostatventil auf, das nach dem gleichen Prinzip funktioniert wie die sanitäre Mischbatterie nach der Erfindung. Auch hierbei ist eine Verringerung der Abmaße durch Veränderung der bekannten Anordnung des Rückstellfederelementes, das sich, wie beim Stand der Technik üblich, am Thermostatgehäuse oder an einem Deckel abstützt, durch die erfindungsgemäße Anordnung möglich.

Zur Verringerung der Einzelteile einer erfindungsgemäßen Mischbatterie bzw. eines erfindungsgemäßen Thermostatventils und zur Vereinfachung des Aufbaus bietet es besondere Vorteile, wenn das Rückstellfederelement zwischen dem Temperatursteuer- und -regelblock und dem Steuer- und Regelkolben neben seiner Rückstellfunktion gleichzeitig abdichtet. Dies bedeutet, daß durch die Doppelfunktion des Rückstellfederelementes zusätzliche Dichtungen eingespart werden können. Die Dichtwirkung durch das Rückstellfederelement kann dann besonders gut verwirklicht werden, wenn das Rückstellfederelement als Tellerfeder ausgebildet ist und unabhängig von der Stellung des Steuer- und Regelkolbens immer zumindest mit geringer Vorspannung zwischen dem Temperatursteuer- und -regelblock und dem Steuer- und Regelkolben wirkt.

In bezug auf weitere Möglichkeiten, die erfindungsgemäßen sanitären Mischbatterien und Thermostatventile auszugestalten und weiterzubilden, wird zunächst auf die weiteren Patentensprüche verwiesen. Im übrigen werden im folgenden die Erfindung sowie Ausgestaltungen und Weiterbildungen der Erfindung anhand einer lediglich Ausführungsbeispiele darstellenden Zeichnung erläutert. Es zeigen:
- Fig. 1 und 2: Längsschnitte durch die wichtigsten Funktionsteile einer nicht zur Erfindung gehörenden und lediglich zur Veranschemlichung dienenden sanitären Mischbatterie mit Thermostatsteuerung,
- Fig. 3: eine perspektivische Darstellung einer Steuerhülse der in den Fig. 1 und 2 dargestellten sanitären Mischbatterie,
- Fig. 4 und 5: Längsschnitte durch die wichtigsten Funktionsteile einer ersten und zweiten Ausführungsform einer erfindungsgemäßen sanitären Mischbatterie mit Thermostatsteuerung,
- Fig. 6: eine ausschnittweise Darstellung einer weiteren Ausführungsform einer erfindungsgemäßen Mischbatterie oder eines Thermostatventils,
- Fig. 7: eine perspektivische Ansicht eines in Fig. 6 dargestellten Rückstellfederelementes und
- Fig. 8 und 9: Ansichten eines weiteren Rückstellfederelementes in Draufsicht, teilweise weggebrochen (Fig. 8) und im Querschnitt (Fig. 9) entlang der Schnittlinie IX - IX aus Fig. 8.

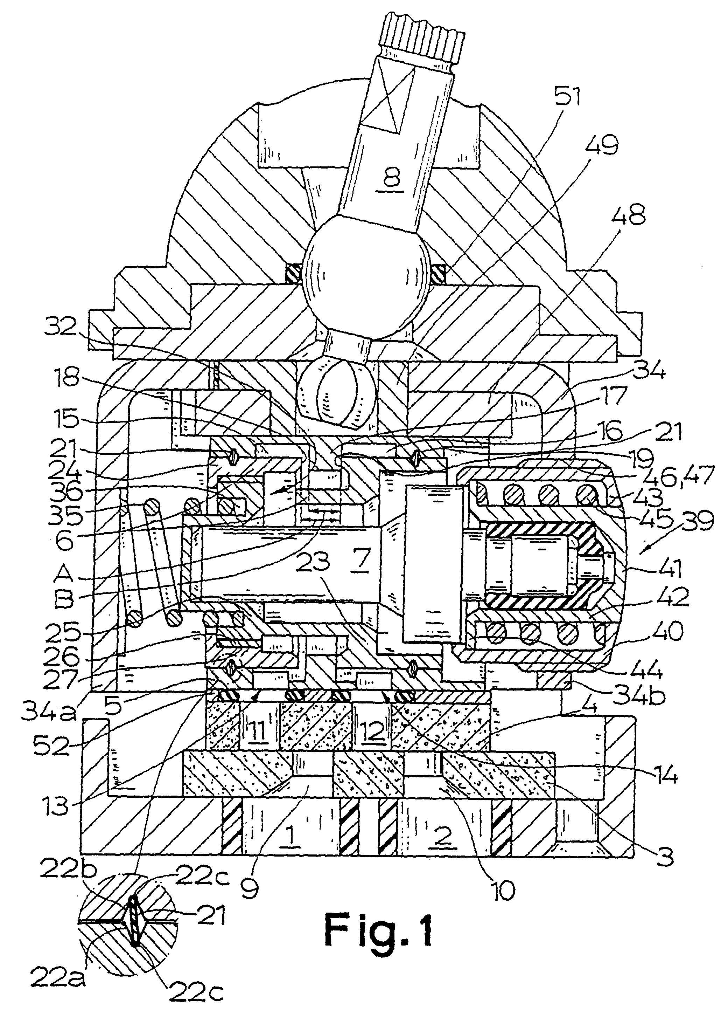

Bei den in den Fig. 1, 2, 4 und 5 nur teilweise dargestellten sanitären Mischbatterien handelt es sich jeweils um einen sog. Einzelthermostaten, d. h. daß die Mengensteuerung einerseits und die Temperatursteuerung und -regelung andererseits an der Verbrauchsstelle erfolgen.

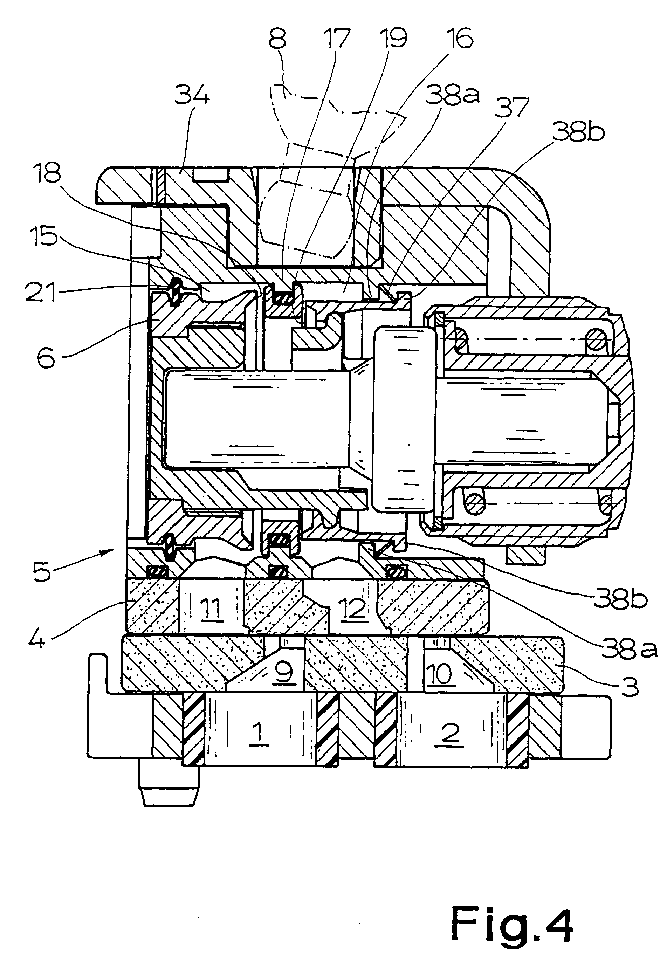

Zu den in den Fig. 1, 2, 4 und 5 nur teilweise dargestellten sanitären Mischbatterien mit Thermostatregelung gehören jeweils zunächst ein Kaltwasserzulauf 1, ein Warmwasserzulauf 2 und ein nicht dargestellter Mischwasserauslauf. In Strömungsrichtung gesehen folgt dem Kaltwasserzulauf 1 und dem Warmwasserzulauf 2 eine feststehende Ventilsitzscheibe 3, eine auf der Ventilsitzscheibe 3 zur Mengensteuerung verschiebbare Ventilscheibe 4 und ein mit der Ventilscheibe 4 zur Mengensteuerung und -regelung zusammenwirkender Temperatursteuer- und -regelblock 5. Ferner gehören zu den sanitären Mischbatterien ein in dem Temperatursteuer- und -regelblock 5 vorgesehener Steuer- und Regelkolben 6, wobei der Temperatursteuer- und -regelblock 5 als den Steuer- und Regelkolben 6 radial umgebende Einrichtung ausgebildet ist, ein mit dem Steuer- und Regelkolben 6 zusammenwirkendes temperaturabhängiges Regelelement 7, ein nicht dargestellter Betätigungshebel und ein mit dem nicht dargestellten Betätigungshebel verbundener Steuerhebel 8, der in Fig. 4 gestrichelt angedeutet ist.

Wie die Fig. 1, 2 und 4 zeigen, weist die Ventilsitzscheibe 3 eine mit dem Kaltwasserzulauf 1 in Verbindung stehende Kaltwassereinlauföffnung 9 und eine mit dem Warmwasserzulauf 2 in Verbindung stehende Warmwassereinlauföffnung 10 auf. In der Ventilscheibe 4 sind, wie die Fig. 1, 2, 4 und 5 zeigen, mit der Kaltwassereinlauföffnung 9 der Ventilsitzscheibe 3 und der Warmwassereinlauföffnung 10 der Ventilsitzscheibe 3 kommunizierende Durchtrittsöffnungen 11, 12 verwirklicht. Der Temperatursteuer- und -regelblock 5 weist mit den Durchtrittsöffnungen 11, 12 der Ventilscheibe 4 kommunizierende Kalt- und Warmwassereintrittsöffnungen 13, 14 sowie einen Kaltwasserringraum 15 und einen Warmwasserringraum 16 auf. Der Steuer- und Regelkolben 6 ist zur Temperatursteuerung relativ zum Temperatursteuer- und regelblock 5 in eine temperaturbestimmende Ausgangslage einstellbar und zur Temperaturregelung mittels des Regelelementes 7 steuerbar.

Wie nun die Fig. 1, 2, 4 und 5 zeigen, weist der Temperatursteuer- und -regelblock 5 - zwischen dem Kaltwasserringraum 15 und dem Warmwasserringraum 16-einen Steuer- und Anschlagbund 17 auf. Der Steuer- und Regelkolben 6 ist hülsenförmig ausgeführt und weist eine Kaltwassersteuerkante 18 und - mit Abstand A zu der Kaltwassersteuerkante 18 - eine Warmwassersteuerkante 19 auf. Der Steuer- und Anschlagbund 17 hat eine Breite B, die geringer ist als der Abstand zwischen der Kaltwassersteuerkante 18 und der Warmwassersteuerkante 19, und ragt in den Zwischenraum zwischen der Kaltwassersteuerkante 18 und der Warmwassersteuerkante 19.

Statt der zuvor beschriebenen Ausführungsform mit einem Steuer- und Anschlagbund kann die Erfindung auch bei sanitären Mischbatterien verwendet werden, bei denen kein Steuer- und Anschlagbund zwischen dem Kaltwasserringraum und dem Warmwasserringraum vorgesehen ist. Bei diesen Ausführungsformen ist der Steuer- und Regelkolben ebendalls zweckmäßigerweise, aber nicht unbedingt notwendigerweise, hülsenförmig ausgebildet. Bei einer dieser Ausführungsformen ist der Abstand zwischen der Kaltwassersteuerkante und der Warmwassersteuerkante größer als die Längsausdehnung des Steuer- und Regelkolbens, so daß sich dieser, die Zuflußrate für Kaltwasser- und Warmwasser gegensinnig im Querschnitt verändernd, zwischen den beiden Steuerkanten zur Regelung der Mischwassertemperatur bewegt. Eine derartige Ausführungsform ist aus der eingangs genannten DE - A - 36 12 988 bekannt. Bei einer anderen Ausführungsform ist der Abstand zwischen der Kaltwassersteuerkante und der Warmwassersteuerkante kleiner als die Längsausdehnung des Steuer- und Regelkolbens, so daß sich dieser, die Zuflußspalte für Kalt- und Warmwasser ebenfalls gegensinnig im Querschnitt verändernd und die beiden Steuerkanten außen übergreifend, zur Regelung der Mischwassertemperatur hin und her bewegt.

In beiden Fällen sind der Kaltwasserringraum und der Warmwasserringraum nicht, wie im folgenden bei den dargestellten Ausführungsformen näher beschrieben wird, jeweils nach außen hin abgedichtet, sondern es findet eine Abdichtung zwischen den beiden Ringräumen auf die im folgenden noch näher beschriebene Art und Weise statt.

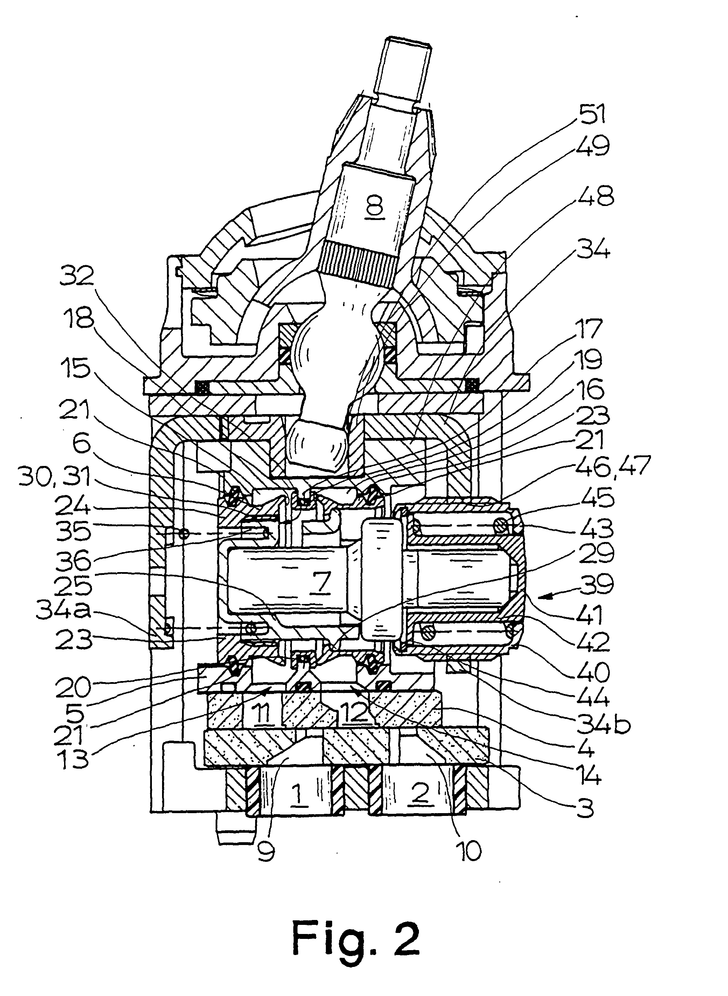

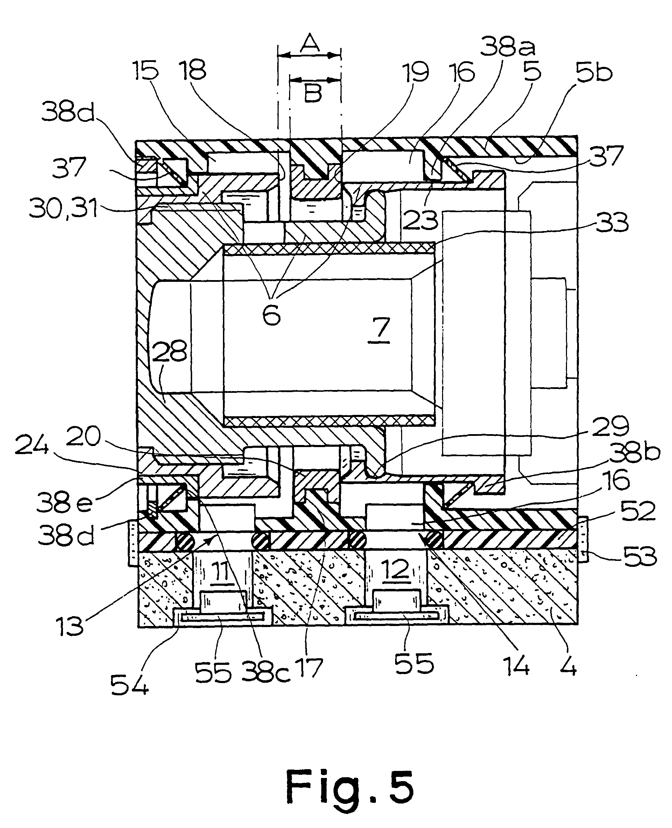

Bei der in Fig. 1 dargestellten Ausführungsform einer sanitären Mischbatterie, die nicht Gegenstand der Vorliegenden Erfindung ist, besteht der Temperatursteuer- und -regelblock 5 aus Kupfer oder Messing, vorzugsweise aus Messing. Demgegenüber kann der Temperatusteuer- und -regelblock 5 bei den Ausführungsformen der Fig. 2, 4 und 5 aus Kunststoff bestehen. Bei der Verwendung von Kunststoff ist dann der Steuer- und Anschlagbund 17 mit einer Panzerung 20 aus härterem Material, beispielsweise aus Kupfer oder Messing, vorzugsweise aus Messing, versehen. Es versteht sich, daß der Temperatursteuer- und -regelblock 5 der in den Fig. 2, 4, und 5 der dargestellten Ausführungsformen aber auch insgesamt aus Kupfer oder Messing, vorzugsweise aus Messing bestehen kann, was sich insbesondere bei den in den Fig. 4 und 5 der dargestellten Ausführungsformen anbieten kann.

Da der Steuer- und Regelkolben 6 innerhalb des Temperatursteuer- und -regelblocks 5 relativ leicht verschiebbar sein soll, um bereits auf geringste Temperaturänderungen ansprechen zu können, ist der dem Steuer- und Regelkolben 6 zugeordnete Innendurchmesser des Temperatursteuer- und -regelblocks 5 größer, vorzugsweise zm ca. 0,3 mm größer als der korrespondierende Außendurchmesser des Steuer- und Regelkolbens 6.

Bei den Ausführungen nach den Fig. 1 und 2 befinden sich zwischen dem Temperatursteuer- und -regelblock 5 und dem Steuer- und Regelkolben 6 zur Abdichtung des Kaltwasserringraums 15 und des benachbarten Warmwasserringraums 16 jeweils nach außen hin je eine ringförmige Membrandichtung 21. Die Membrandichtungen 21 dienen nicht nur zur Abdichtung des Kaltwasserringraumes 15 und des Warmwasserringraumes 16 nach außen hin, sondern auch zur Führung des Steuer- und Regelkolbens 6 im Temperatursteuer- und -regelblock 5. Jede Membrandichtung 21 ist mit ihrem äußeren Rand in einer äußeren Nut 22 a und mit ihrem inneren Rand in einer inneren Nut 22 b fixiert. Die äußere Nut 22 a ist dabei im Temperatursteuer- und -regelblock 5 ausgebildet, während die innere Nut 22 b am Steuer- und Regelkolben 6 verwirklich ist, was aus der vergrößerten Detaildarstellung in Fig. 1 gut ersichtlich ist. Im in der Fig. 1 dargestellten Ausführungsbeispiel sind die äußeren Nuten 22 a und die inneren Nuten 22 b jeweils V-förmig ausgebildet und jeweils mit einem Einstich 22 c im Nutgrund versehen, die zur Befestigung bzw. zur sicheren Halterung der Membrandichtung 21 in den Nuten 22 a und 22 b dienen. Auf die Ausbildung eines Einstiches ist bei der Ausführungsform gemäß Fig. 2 verzichtet worden. Hierbei wird die Membrandichtung 21 gegen den Nutgrund der äußeren Nut 22 a und der inneren Nut 22 b gedrückt und dichtet auf diese Weise ab. Durch den Ersatz der beim Stand der Technik verwendeten O-Ringe durch eine Membrandichtung 21 wird nunmehr eine reibungsfreie Temperaturregelung bei hervorragender Abdichtung möglich, d. h. daß das ablaufende Mischwasser keinen Temperaturschwankungen durch etwaige Leckströmungen unterliegt.

Bei den nicht dargestellten Ausführungsformen, bei denen die Steuerkanten entweder außerhalb der Längserstreckung des Steuer- und Regelkolbens oder aber im Bereich des Steuer- und Regelkolbens liegen, wobei aber in jedem Falle kein Steuer- und Anschlagbund vorgesehen ist, sind der Kaltwasser- und der Warmwasserringraum gegeneinander über die Membrandichtung abgedichtet. Hierbei ist dann nur eine Membrandichtung erforderlich. Dementsprechend ist auch nur eine äußere Nut im Temperatursteuer- und -regelblock und eine innere Nut im Steuer- und Regelkolben zur Aufnahme der Befestigung der Membrandichtung vorgesehen. Die Membrandichtung verhindert hierbei die unerwünschte Vermischung von Warm- und Kaltwasser aus den jeweiligen Ringräumen.

Für die in Fig. 1 dargestellte sanitäre Mischbatterie gilt nun weiter, daß der Steuer- und Regelkolben 6 aus einem ersten Kolbenteil 23 und einem zweiten Kolbenteil 24 besteht. Dabei weist das erste Kolbenteil 23 ein in das zweite Kolbenteil 24 hineinragendes Verbindungsteil 25 mit einem Außengewinde 26 auf, wobei das zweite Kolbenteil 24 mit einem Innengewinde 27 versehen ist und die beiden Kolbenteile 23, 24 miteinander verschraubt sind. Die beiden Kolbenteile 23, 24 bestehen aus Kupfer oder aus Messing, vorzugsweise aus Messing.

Für die in den Fig. 2, 4 und 5 dargestellten Ausführungsformen einer sanitären Mischbatterie gilt, daß der Steuer- und Regelkolben 6 aus einem ersten Kolbenteil 23, einem zweiten Kolbenteil 24 und einem die beiden Kolbenteile 23, 24 verbindenden Adapter 28 besteht. Im einzelnen gilt, daß der Adapter 28 einerseits durch eine Schnappverbindung 29 mit dem ersten Kolbenteil 23 verbunden ist, andererseits ein Außengewinde 30 aufweist und mit dem Außengewinde 30 in das zweite Kolbenteil 24 hineinragt, daß das zweite Kolbenteil 24 mit einem Innengewinde 31 versehen ist und die beiden Kolbenteile 23, 24 miteinander verschraubt sind. Bei dieser Ausführungsform bestehen die beiden Kolbenteile 23, 24 aus Kupfer oder aus Messing, vorzugsweise aus Messing, und ist der Adapter 28 in Kunststoff ausgeführt. Für die Verwirklichung der in den Fig. 4 und 5 dargestellten Erfindung spielt es allerdings keine Rolle, ob der Steuer- und Regelkolben einen Adapter mit Schnappverbindung oder einem zu verschraubenden Verbindungsteil aufweist.

Wie zuvor beschrieben, bestehen bei den in den F.ig. 1, 2, 4 und 5 dargestellten Ausführungsformen sanitärer Mischbatterien die beiden Kolbenteile 23, 24 des Steuer- und Regelkolbens 6 aus Kupfer oder aus Messing, vorzugsweise aus Messing. Denkbar ist jedoch auch eine in den Figuren nicht dargestellte Ausführungsform, bei der der Steuer- und Regelkolben insgesamt aus Kunststoff besteht und an Stellen, die einem besonderen Verschleiß unterliegen, wie beispielsweise die Kaltwassersteuerkante und die Warmwassersteuerkante, mit einer Panzerung aus Kupfer oder aus Messing, vorzugsweise aus Messing, versehen ist.

Für die in den Fig. 1, 2, 4 und 5 dargestellten Ausführungsformen sanitärer Mischbatterien gilt nun weiter, daß der Steuer- und Regelkolben 6 in Abhängigkeit von der Stellung des Steuer- und Regelkolbens 6 relativ zum Temperatursteuer- und -regelblock 5 mit dem Kaltwasserringraum 15 und/oder dem Warmwasserringraum 16 kommunizierende, in den Innenraum des Steuer- und Regelkolbens 6 mündende Durchtrittsöffnungen 32 aufweist. Dabei kann dann jeweils im Innenraum des Steuer- und Regelkolbens 6 eine vorzugsweise an der Innenwand liegende, nur in Fig. 5 gezeigte Siebhülse 33 vorgesehen und das Regelelement 7 zumindest teilweise innerhalb des Steuer- und Regelkolbens 6, also in dessen Innenraum, angeordnet sein.

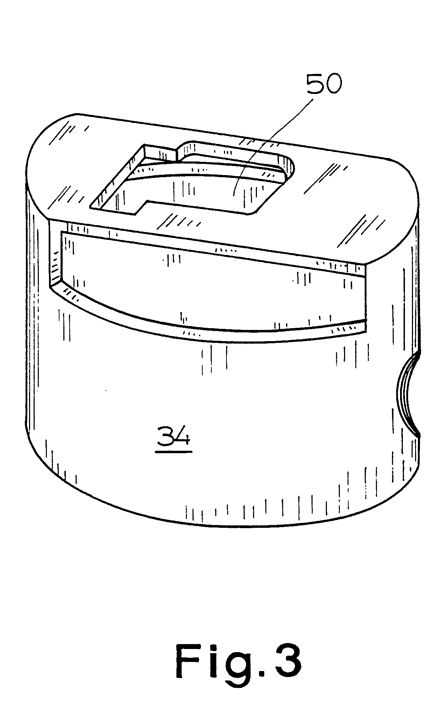

In Fig. 3 ist eine Steuerhülse 34 dargestellt, die den Temperatursteuer- und -regelblock 5 der Ausführungsformen nach den Fig. 1 und 2 zumindest zum Teil übergreift. Bei den Ausführungsformen nach den Fig. 1 und 2 ist der Steuer- und Regelkolben 6 in die Steuerhülse 34 eingespannt. Allen Ausführungen gemeinsam ist allerdings, daß das Regelelement 7 in die Steuerhülse 34 eingespannt ist. Für die Ausführungsformen nach den Fig. 1 und 2 gilt, daß der Steuer- und Regelkolben 6 über ein Steuer- und Regelelement 35 an einem ersten Abstützflansch 34 a der Steuerhülse 34 und das Regelelement 7 an einem zweiten Abstützflansch 34 b der Steuerhülse 34 abgestützt sind, daß das Rückstellfederelement 35 als Schraubendruckfeder ausgeführt ist und daß das dem Rückstellfederelement 35 zugewandte Ende des Steuer- und Regelkolbens 6 eine das dem Steuer- und Regelkolben 6 zugewandte Ende des Rückstellfederelements 35 aufnehmende Ringnut 36 aufweist.

Von den Ausführungsformen nach den Fig. 1 und 2 unterscheiden sich die erfindungsgemäßen Ausführungsformen nach den Fig. 4 und 5 dahingehend, daß kein als Schraubendruckfeder ausgebildetes Rückstellfederelement vorgesehen ist. Dementsprechend ist auch am Steuer- und Regelkolben 6 keine Ringnut vorgesehen. Bei der Ausführungsform nach Fig. 4 sind ein Rückstellfederelement 37, bei der Ausführungsform nach Fig. 5 zwei Rückstellfederelemente 37 verwendet, wobei sich jedes Rückstellfederelement 37 einerseits am Temperatursteuer- und -regelblock 5, d. h. an seinem Innenmantel, und andererseits am Steuer- und Regelkolben 6, d. h. an seinem Außenmantel, abstützt. Das bedeutet, daß auf ein als Schraubendruckfeder ausgebildetes Rückstellfederelement, wie in den Fig. 1 und 2 dargestellt, vollständig verzichtet werden kann.

Zur Anordnung bzw. Abstützung des Rückstellfederelementes 37 am Temperatursteuer- und -regelblock 5 einerseits und am Steuer- und Regelkolben 6 andererseits ist am Temperatursteuer- und -regelblock 5 ein umlaufender Anschlag 38 a vorgesehen, während am Steuer- und Regelkolben 6 ein umlaufender Anschlag 38 b vorgesehen ist. Dies gilt zumindest für das erste Kolbenteil 23. Wesentlich ist in jedem Fall, daß bei den Ausführungsformen nach den Fig. 4 und 5 das Rückstellfederelement 37 zwischen dem Temperatursteuer- und -regelblock 5 einerseits und dem Steuer- und Regelkolben 6 andererseits selbst abdichtet, d. h. daß an dieser Stelle keine weiteren Dichtungen erforderlich sind.

Das Rückstellfederelement 37 ist als Tellerfeder ausgebildet. Weiterhin ist vorgesehen, daß das Rückstellfederelement 37 unabhängig von der Stellung des Steuer- und Regelkolbens 6 immer zumindest mit geringer Vorspannung zwischen dem Temperatur- und -regelblock 5 und dem Steuer- und Regelkolben 6 wirkt, was bedeutet, daß selbst dann, wenn die Kaltwassersteuerkante 18 am Steuer- und Anschlagbund 17 anschlägt, das Rückstellfederelement 37 noch eine geringe Vorspannung hat und gegen die Anschläge 38 a, 38 b federt. Hierdurch wird gewährleistet, daß das Rückstellfederelement 37 sich in jeder Lage des Steuer- und Regelkolbens 6 in dichtender Anlage an diesem und am Temperatursteuer- und -regelblock 5 befindet. Da sich die umlaufenden Ränder des Rückstellfederelementes 37 bei der Be- und Entlastung im Bereich der Anschläge 38 a, 38 b entlang von Gleitflächen bewegen, sollten zumindest die die Gleitflächen bildenden Bereiche des Temperatursteuer- und -regelblocks 5 und des Steuer- und Regelkolbens 6 aus gehärtetem Material bestehen. Hierzu besteht die Möglichkeit, den Temperatursteuer- und -regelblock 5 sowie den Steuer- und Regelkolben 6 vollständig aus Kupfer oder aus Messing, vorzugsweise aus Messing, herzustellen oder im Falle der Verwendung von Kunststoff entsprechende Einsätze vorzusehen, welche den Anschlag 38 a, 38 b und die Gleitfläche bilden, was aber nicht dargestellt ist.

Da bei den Ausführungsformen nach den Fig. 4 und 5 keine Schraubendruckfeder verwendet wird, kann der hierfür üblicherweise erforderliche Raumbedarf sowie derjenige für den Abstützflansch der Steuerhülse vollständig eingespart werden. Dies bedeutet natürlich auch, daß die Abmaße der erfindungsgemäßen sanitären Mischbatterie weiter verringert werden können. Gleichzeitig bedeutet dies, daß eine Ringnut am Steuer- und Regelkolben 6 bei den Ausführungsformen nach den Fig. 4 und 5 nicht erforderlich ist, und weiter, daß die bei den Ausführungsformen nach den Fig. 4 und 5 verwendete Steuerhülse 34, zumindest was die Ausbildung des ersten Abstützflansches 34 a angeht, der Steuerhülse 34 bei den Ausführungsformen nach den Fig. 1 und 2 nicht entspricht. Die Steuerhülse 34 kann an der genannten Stelle entweder eine Ausnehmung aufweisen oder entsprechend schmaler sein.

Die Ausführungsformen nach den Fig. 4 und 5 unterscheiden sich weiter dahingehend, daß bei der Ausführungsform nach Fig. 4 beim zweiten Kolbenteil 24 eine äußere Nut 22 a und eine innere Nut 22 b mit einer Membrandichtung 21 vorgesehen sind, während bei der Ausführungsform gemäß Fig. 5 zur Abdichtung wiederum ein Rückstellfederelement 37, wie beim ersten Kolbenteil 23, verwendet ist. Es versteht sich, daß bei der Ausführungsform nach Fig. 4 die Membrandichtung 21 auch im Bereich des ersten Kolbenteils 23 und das Rückstellfederelement 37 im Bereich des zweiten Kolbenteils 24 angeordnet sein kann, wofür dann selbstverständlich die entsprechende Ausbildung von Nuten und Anschlägen erforderlich ist.

Die Verwendung eines als Tellerfeder ausgebildeten Rückstellfederelementes 37 setzt voraus, daß im Bereich des ersten Kolbenteils 23 eine öffnung 5 b im Temperatursteuer- und -regelblock 5 vorgesehen ist, deren Innendurchmesser etwa dem Außendurchmesser des Rückstellfederelementes 37 entspricht, vorzugsweise etwas größer ist, so daß das Rückstellfederelement 37 in einfacher Weise in die öffnung 5 b eingesetzt werden kann, bis es am Anschlag 38 a anstößt. Weiterhin ist zu beachten, daß der maximale Außendurchmesser des ersten Kolbenteils 23 im Anschluß an den Anschlag 38 b, d. h. in Richtung auf das zweite Kolbenteil 24, etwa dem Innendurchmesser des Rückstellfederelementes 37 entspricht, vorzugsweise etwas kleiner ist. Die Höhe der Anschläge 38 a, 38 b ist auf die Spaltweite zwischen der Kaltwassersteuerkante 18 und der Warmwassersteuerkante 19 und dem Steuer- und Anschlagbund 17 bzw. dem maximalen Federweg des Rückstellfederelemente 37 abzustimmen.

Während das Rückstellfederlement 37 zusammen mit dem ersten Kolbenteil 23 auf dem Adapter 28 aufgeschnappt wird und im aufgeschnappten Zustand unter einer gewissen Vorspannung steht, um die erwähnte Dichtwirkung zu erzielen, wird das Rückstellfederelement 37 für das zweite Kolbenteil 24 erst nachträglich eingesetzt. Dazu versteht es sich, daß zwischen dem zweiten Kolbenteil 24 und dem Temperatursteuer- und -regelblock 5 ein Ringspalt ausgebildet ist, dessen Abmaße derart gewählt sind, daß das unbelastete Rückstellfederelement 37 darin aufgenommen werden kann und im belasteten Zustand an einem Anschlag 38 c am zweiten Kolbenteil 24 anschlägt. Um nun auch einen Anschlag am Temperatursteuer- und -regelblock 5 zu gewährleisten, gibt es zwei Möglichkeiten, die beide in Fig. 5 gezeigt sind. In der oberen Hälfte der Fig. 5 wird zur Ausbildung eines Anschlags 38 d ein Innenring gewählt, der ein Außengewinde aufweist, wobei ein entsprechendes Innengewinde am Temperatursteuer- und -regelblock 5 vorgesehen ist, so daß der Innenring in die bestimmte Stellung eingeschraubt werden kann und das Rückstellfederelement 37 entsprechend vorgespannt wird. In der unteren Hälfte der Fig. 5 ist der Anschlag 38 d als Sprengring ausgebildet, der in einer entsprechenden Nut im Temperatursteuer- und -regelblock 5 aufgenommen ist.

Weiterhin ist aus Fig. 5 ein umlaufender Einsatz 38 e ersichtlich, der auf den Steuer- und Regelkolben 6 aufgeschoben und vorzugsweise an diesem befestigt ist. Dieser Einsatz 38 e besteht aus gehärtetem Material und weist nicht nur den Anschlag 38 c, sondern auch die Gleitfläche für das Rückstellfederelement 37 auf. Entsprechende Einsätze, die den jeweiligen Anschlag und/oder die jeweilige Gleitfläche bilden, können auch im Bereich der Anschläge 38 a, 38 b und 38 c vorgesehen sein, was aber nicht dargestellt ist.

Bei einer nicht dargestellten Ausführungsform, bei der der Anschlag nicht über einen Innenring oder einen Sprengring verwirklicht sein muß, sondern fest am Temperatursteuer- und -regelblock 5 ausgebildet ist, wird das Rückstellfederelement 37 über die öffnung in den Temperatursteuer- und -regelblock 5 eingesetzt. Die übrigen Anschläge (und auch der Anschlagbund) können in diesem Fall über Sprengringe oder Verschraubungen gebildet sein.

Aus den obigen Ausführungen ergibt sich, daß für jede als Rückstellfederelement ausgebildete Tellerfeder immer eine Art Anschlag am Steuer- und Regelkolben und eine Art Anschlag am Temperatursteuer- und -regelblock vorgesehen sein muß. Hierbei ist die Anordnung der Tellerfeder aus konstruktiven Gründen im Bereich desjenigen Kolbenteils einfacher, bei dem der Anschlag auf dem Steuer- und Regelkolben außenliegend, d. h. weiter vom Steuer- und Anschlagbund weg, und der Anschlag am Temperatursteuer- und -regelblock innenliegend, d. h. näher zum Steuer- und Anschlagbund hin, ist.

Sämtliche der vorgenannten Merkmale und Vorteile gelten selbstverständlich auch für die erwähnten, nicht dargestellten Ausführungsformen ohne Steuer- und Anschlagbund sowie für Thermostatventile, so daß auf eine gesonderte Erörterung zur Vermeidung von Wiederholungen verzichtet werden kann. Allerdings sei noch erwähnt, daß die den Steuer- und Regelkolben radial umgebende Einrichtung bei einem Thermostatventil beispielsweise durch das Thermostatgehäuse selbst bzw. einen Abschnitt davon gebildet sei kann. Der Begriff "Einrichtung" ist jeweils als Oberbegriff für den jeweiligen "Gegenstand" zu verstehen, der den Steuer- und Regelkolben umgibt, sowohl was sanitäre Mischbatterien als auch was Thermostatventile betrifft.

Der Vorteil der ausschließlichen Verwendung von Rückstellfederelementen 37, die gleichzeitig als Dichtungen wirken, also unter Einsparungen etwaiger weiterer Dichtungen - eine derartige Ausführungsform ist in Fig. 5 dargestellt -, liegt darin, daß bei geeigneter Materialwahl, beispielsweise Federstahl für das Rückstellfederelement 37, und bei Verwendung gehärteter Gleitflächen und Anschläge, erfindungsgemäße Dichtstellen eine theoretisch unendliche Lebensdauer haben. Allerdings ist der konstruktive Aufwand, insbesondere zur Realisierung des Anschlags 38 d, etwas höher als die Ausbildung einer inneren Nut 22 a mit und äußeren Nut 22 b mit eingesetzter Membrandichtung 21, wie dies in Fig. 4 gezeigt ist.

Wie die Fig. 2, 4 und 5 weiter zeigen, ist zwischen dem dem zweiten Abstützflansch 34 b der Steuerhülse 3 zugewandten Ende des Regelementes 7 und dem zweiten Abstützflansch 34 b der Steuerhülse 34 eine Restwegeinheit 39 vorgesehen, die eine federbelastete Bewegung des dem zweiten Abstützflansch 34 b der Steuerhülse 34 zugewandten Ende des Regelelementes 7 relativ zum zweiten Abstützflansch 34 b der Steuerhülse 34 zuläßt. Im einzelnen besteht die Restwegeinheit 39 aus einer mit dem zweiten Abstützflansch 34 b der Steuerhülse 34 verbundenen Außenhülse 40, einer eine Abstützfläche 41 für das Regelelement 7 aufweisenden Innenhülse 42 und einer zwischen dem Innenbund 43 der Außenhülse 40 und einem Außenbund 44 der Innenhülse 42 vorgesehenen Restwegfeder 45. Dabei weist der zweite Abstützflansch 34 b der Steuerhülse 34 eine der Aufnahme der Restwegeinheit 39 dienende Gewindebohrung 46 auf, ist die die Außenhülse 40 der Restwegeinheit 39 mit einem Außengewinde 47 versehen und ist die Restwegeinheit 39 mit dem Außengewinde 47 der Außenhülse 40 in die Gewindebohrung 46 des zweiten Abstützflansches 34 b der Steuerhülse 34 eingeschraubt.

Vorzugsweise bestehen die Außenhülse 40 und die Innenhülse 42 der zuvor beschriebenen Restwegeinheit 39 aus Kunststoff. Dabei kann dann, wie im einzelnen nicht dargestellt, die Außenhülse 40 der Restwegeinheit 39 mindestens einen nach innen ragenden Rastvorsprung aufweisen und die Innenhülse 42 mit mindestens einem ihren Außenbund teilenden Federschlitz versehen sein.

Für die in den Fig. 1, 2, 4 und 5 dargestellten Ausführungsformen sanitärer Mischarmaturen gilt weiter, daß die Steuerhülse 34 einerseits mit dem Temperatursteuer- und -regelblock 5 und andererseits relativ zum Temperatursteuer- und -regelblock 5 verschiebbar ist. Dazu ist der Temperatursteuer- und -regelblock 5 mit einem Steuerkopf 48 versehen, ist in dem Steuerkopf 48 ein Exzenter 49 drehbar gelagert, weist die Steuerhülse 34 eine Steuerausnehmung 50 auf und ist die Steuerhülse 34 durch ein Zusammenwirken von Exzenter 49 und Steuerausnehmung 50 einerseits mit dem Temperatursteuer- und -regelblock 5 und andererseits relativ zum Temperatursteuer- und -regelblock 5 verschiebbar. Der Exzenter 49 weist eine Steuerausnehmung 51 auf, in die der mit dem nicht dargestellten Betätigungshebel verbundene Steuerhebel 8 eingreift.

Weiterhin können insbesondere der Fig. 5 noch weitere vorteilhafte Maßnahmen in Verbindung mit der erfindungsgemäßen sanitären Mischbatterie entnommen werden. Zunächst gilt, daß die Ventilscheibe 4 über eine Verbindungsplatte 52 mit dem Temperatursteuer- und -regelblock 5 verbunden ist, wobei die Verbindungsplatte 52 die Ventilscheibe 4 einerseits und den Temperatursteuer- und -regelblock 5 andererseits übergreifende Vorsprünge 53 aufweist. Weiter kann der Fig. 5 entnommen werden, daß die in der Ventilscheibe 4 verwirklichten Durchtrittsöffnungen 11, 12 an der der Ventilsitzscheibe 3 zugewandten Seite mit einer Erweiterung 54 versehen sind und daß in den an der Ventilscheibe 4 verwirklichten Durchtrittsöffnungen 11, 12 an der der Ventilsitzscheibe 3 zugewandten Seite jeweils ein Siebeinsatz 55 vorgesehen ist.

In den Figuren ist nicht dargestellt, daß bei sanitären Mischbatterien die Ventilscheibe und der Temperatursteuer- und -regelblock einstückig ausgeführt sein können, wobei dann die Durchtrittsöffnungen in der Ventilsitzscheibe mit der Kaltwassereintrittsöffnung und der Warmwassereintrittsöffnung im Temperatursteuer- und -regelblock zusammenfallen. Zweckmäßigerweise sind jedoch, wie dies in den Figuren dargestellt ist, die Ventilscheibe einerseits und der Temperatursteuer- und -regelblock andererseits als separate Bauteile ausgeführt, weil nur dann die Möglichkeit besteht, die für die beiden Bauteile kosten- und funktionsmäßig optimalen Werkstoffe einzusetzen.

Weiterhin ist in den Figuren nicht dargestellt, daß bei sanitären Mischbatterien der Temperatursteuer- und -regelblock mit dem Steuerkopf und der Verbindungsplatte einstückig ausgeführt sein kann, was kostengünstiger ist als die Realisierung separater Bauteile. Diese einstückige Ausführung kann aus Kupfer oder aus Messing bestehen, besteht vorzugsweise, wiederum aus Kostengründen, jedoch aus Kunststoff.

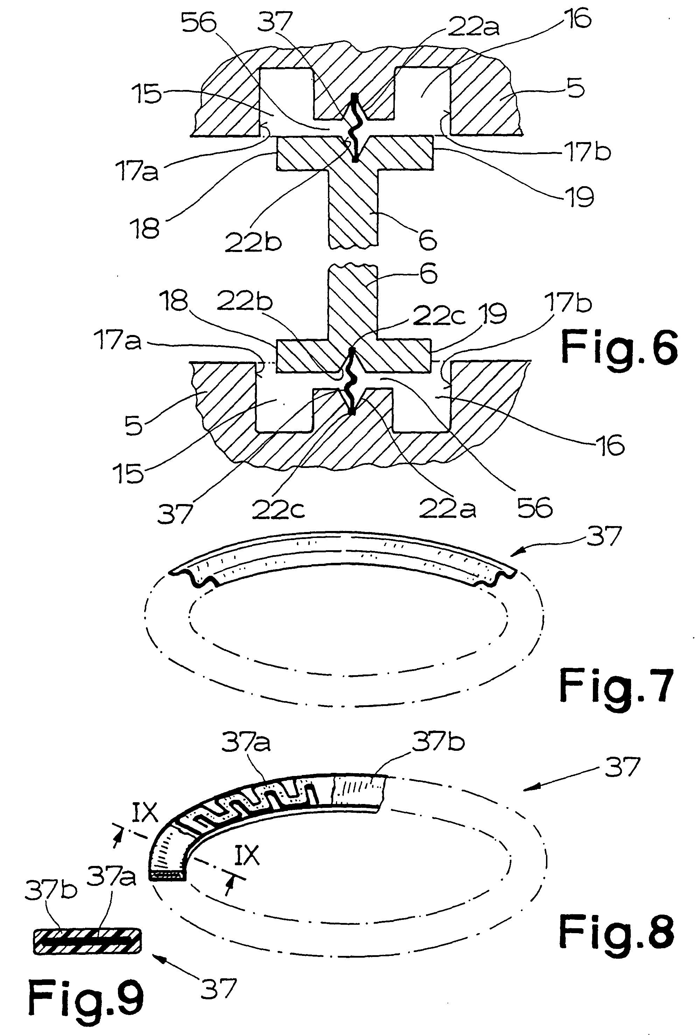

Fig. 6 zeigt einen Längsschnitt einer ausschnittweise dargestellten, weiteren Ausführungsform der Mischbatterie mit Thermostatsteuerung.

Dabei ist aus Gründen der übersichtlichkeit eine Vielzahl von Funktionsteilen nicht dargestellt worden. Der in Fig. 6 dargestellte Teil der erfindungsgemäßen sanitären Mischbatterie soll lediglich das weiter oben bereits erwähnte erfindungsgemäße Prinzip verdeutlichen, bei dem kein Steuer- und Anschlagbund vorhanden ist und stattdessen äußere Kanten 17 a und 17 b vorgesehen sind, deren Abstand voneinander größer ist als die Längsausdehnung des Steuer- und Regelkolbens 6. In Fig. 6 sind im oberen und im unteren Teil der Darstellung jeweils unterschiedliche Ausführungsformen dargestellt, auf die im folgenden näher eingegangen wird. Der Unterschied zwischen den beiden in Fig. 6 dargestellten Ausführungsformen besteht darin, daß bei der im unteren Teil der Fig. 6 dargestellten Ausführungsform bei entsprechender Einstellung die Kaltwassersteuerkante 18 an der Kante 17 a bzw. die Warmwassersteuerkante 19 an der Kante 17 b anschlagen kann, während bei der im oberen Teil der Fig. 6 dargestellten Ausführungsform der Steuer- und Regelkolben 6 über die jeweilige Kante 17 a bzw. 17 b mit seiner Kaltwassersteuerkante 18 bzw. seiner Warmwassersteuerkante 19 hinausbewegen kann. Dies setzt natürlich voraus, daß in den genannten Stellungen eine entsprechende Abdichtung zwischen dem Innenmantel des Temperatursteuer- und -regelblocks 5 und dem Außenmantel des Steuer- und Regelkolbens 6 gewährleistet ist.

Bei beiden in Fig. 6 dargestellten Ausführungsformen ist nur ein einziges Rückstellfederelement 37 erforderlich, welches die Rückstellung des Steuer- und Regelkolbens 6 übernimmt und gleichzeitig zwischen dem Steuer- und Regelkolben 6 und dem Temperatursteuer- und -regelblock 5 abdichtet. Das Rückstellfederelement 37 hat zumindest im vorgespannten Zustand in radialer Richtung einen etwa S-förmig ausgebildeten, nicht näher bezeichneten Abschnitt. Dieser S-förmige Abschnitt hält den Steuer- und Regelkolben 6 im in den Temperatursteuer- und -regelblock 5 eingesetzten Zustand unter Spannung und gewährleistet in besonders vorteilhafter Weise, daß ein zwischen dem Außenmantel des Steuer- und Regelkolbens 6 und dem Innenmantel des Temperatursteuer- und -regelblocks 5 ausgebildeter Spalt 56 relativ groß ausgebildet sein kann. Ein derartig großer Spalt 56 verhindert ein Verkalken der erfindungsgemäßen Mischbatterie. An dieser Stelle sei darauf hingewiesen, daß die entsprechenden Spalte bei den Ausführungsformen der Fig. 1, 2, 4 und 5 und den nicht erwähnten Ausführungsformen ebenfalls entsprechend groß ausgeführt sind, auch wenn dies im einzelnen nicht näher dargestellt ist.

Fig. 7 zeigt das sowohl als Membrandichtung als auch als Rückstellelement dienende ringförmige Rückstellfederelement 37 mit seinem S-förmigen Abschnitt entsprechend der Ausführungsform aus Fig. 6. Ersichtlich weist das Rückstellfederelement 37 auch in unbelastetem Zustand einen S-förmigen Abschnitt auf.

In den Fig. 8 und 9 ist eine weitere Ausführungsform des erfindungsgemäßen Rückstellfederelementes 37 dargestellt. Aus Fig. 8 ist ersichtlich, daß das Rückstellfederlement 37 eine in Umfangsrichtung etwa schlaufen- oder mäanderförmig ausgebildete Feder 37 a aufweist. Aufgrund dieser besonderen Ausbildung der Feder 37 a ist eine die Feder 37 a umgebende äußere Umhüllung 37 b erforderlich, die vorzugsweise aus Kunststoff oder Elastomer besteht und ringförmig ausgebildet ist. Durch die besondere Ausbildung des Rückstellfederelementes 37 mit Feder 37 a und äußerer Umhüllung 37 b ist die Flexibilität des Rückstellfederelementes 37 in weiten Grenzen einstellbar.

Es versteht sich, daß die in den Fig. 6 bis 9 dargestellten Ausführungsformen des erfindungsgemäßen Rückstellfederelements 37 selbstverständlich auch bei den in den Fig. 1, 2, 4 und 5 dargestellten sowie den nicht dargestellten Ausführungsformen Verwendung finden können. Auch kann das in den Fig. 8 und 9 dargestellte Rückstellfederelement entsprechend der Ausführung gemäß den Fig. 6 und 7 einen etwa S-förmigen Abschnitt aufweisen.

## Patentansprüche

1. Thermostatventil mit einem Steuer- und Regelkolben (6), mit einem den Steuer- und Regelkolben (6) radial umgebenden Temperatursteuer- und -regelblock (5), der insbesondere als radial den Steuer- und Regelkolben (6) umgebender Abschnitt des Thermostatventilgehäuses ausgebildet ist, mit einem mit dem Steuer- und Regelkolben (6) zusammenwirkenden temperaturabhängigen Regelelement (7), mit einem Betätigungselement und mit einem oder zwei den Steuer- und Regelkolben (6) in Richtung auf das Regelelement (7) belastenden Rückstellfederelement(en) (37), wobei der Steuer- und Regelkolben (6) zur Temperatursteuerung relativ zum Temperatursteuer- und -regelblock (5) in eine temperaturbestimmende Ausgangslage einstellbar und zur Temperaturregelung mittels des Regelelement (7) regelbar ist, **dadurch gekennzeichnet, daß** das/die Rückstellfederelement(e) (37) zwischen dem Temperatursteuer- und -regelblock (5) und dem Steuer- und Regelkolben (6) angeordnet ist/sind und sich einerseits am Temperatursteuer- und -regelblock (5), vorzugsweise auf dessen Innenmantelfläche, und, andererseits auf der Außenmantelfläche des Steuer- und Regelkolbens (6) abstützt/abstützen.

2. Thermostatventil nach Anspruch 1, **dadurch gekennzeichnet, daß** am Temperatursteuer- und -regelblock (5) und auf der Außenmantelfläche des Steuer- und Regelkolbens (6) jeweils ein Anschlag (28a, 38b) für das Rückstellfederelement (37) vorgesehen ist.

3. Thermostatventil nach Anspruch 1 oder 2, **dadurch gekennzeichnet, daß** das Rückstellfederelement (37) zwischen dem Temperatursteuer- und -regelblock (5) und dem Steuer- und Regelkolben (6) abdichtet und daß vorzugsweise keine weiteren Dichtungen zwischen dem Temperatursteuer- und -regelblock (5) und dem Steuer- und Regelkolben (6) vorgesehen sind.

4. Thermostatventil nach Anspruch 3, **dadurch gekennzeichnet, daß** das Rückstellfederelement (37) zwischen dem Kaltwasserringraum (15) und dem Warmwasserringraum (16) abdichtet oder den Kaltwasserringraum (15) und/ oder den Warmwasserringraum (16) jeweils nach außen hin abdichtet.

5. Thermostatventil nach einem der vorhergehenden Ansprüche, **dadurch gekennzeichnet, daß** das Rückstellfederelement (37) unabhängig von der Stellung des Steuer- und Regelkolbens (6) immer zumindest mit geringer Vorspannung zwischen dem Temperatursteuer- und -regelblock (5) und dem Steuer- und Regelkolben (6) wirkt.

6. Thermostatventil nach einem der vorhergehenden Ansprüche, **dadurch gekennzeichnet, daß** das Rückstellfederelement (37) als Tellerfeder ausgebildet ist.

7. Thermostatventil nach Anspruch 6, **dadurch gekennzeichnet, daß** am Temperatursteuer- und -regelblock (5) und/oder Steuer- und Regelkolben (6) aus gehärtetem Material bestehende Gleitflächen für das Rückstellfederelement (37) vorgesehen sind.

8. Thermostatventil nach Anspruch 6 oder 7, **dadurch gekennzeichnet, daß** am Temperatursteuer- und -regelblock (5) und/oder Steuer- und Regelkolben (6) jeweils wenigstens ein Einsatz aus gehärtetem Material vorgesehen ist und an dem Einsatz der Anschlag (38a, 38b) und die Gleitflächen ausgebildet sind.

9. Thermostatventil nach einem der vorhergehenden Ansprüche, **dadurch gekennzeichnet, daß** das Rückstellfederelement (37) zumindest im vorgespannten Zustand in radialer Richtung einen etwa S-förmig ausgebildeten Abschnitt aufweist.

10. Thermostatventil nach einem der vorhergehenden Ansprüche, **dadurch gekennzeichnet, daß** das Rückstellfederelement (37) eine in Umfangsrichtung etwa schlaufen- oder mäanderförmig ausgebildete Feder (37a) aufweist.

11. Thermostatventil nach einem der vorhergehenden Ansprüche, **dadurch gekennzeichnet, daß** das Rückstellfederelement (37) eine äußere Umhüllung (37b) vorzugsweise aus Kunststoff oder Elastomer aufweist.

12. Sanitäre Mischbatterie mit einer Thermostatsteuerung, einem Kaltwasserzulauf (1). einem Warmwasserzulauf (2), einem Mischwasserzulauf und einem Betätigungshebel, wobei ein Kaltwasserringraum (15) und ein benachbarter Warmwasserringraum (16) vorgesehen sind, **dadurch gekennzeichnet, daß** die Thermostatsteuerung ein Thermostatventil nach einem der vorhergehenden Anspüche aufweist.

13. Sanitäre Mischbatterie nach Anspruch 12, mit einer feststehenden Ventilsitzscheibe (3), mit einer auf der Ventilsitzscheibe (3) zur Mengensteuerung verschiebbaren Ventilscheibe (4) und mit einem mit dem Betätigungshebel verbundenen Steuerhebel (8), wobei die Ventilsitzscheibe (3) eine mit dem Kaltwasserzulauf (1) in Verbindung stehende Kaltwassereinlauföffnung (9) und eine mit dem Warmwasserzulauf (2) in Verbindung stehende Warmwassereinlauföffnung (10) aufweist, die Ventilscheibe (4) mit der Kaltwassereinlauföffnung (9) der Ventilsitzscheibe (3) kommunizierende Durchtrittsöffnungen (11, 12) aufweist, der Temperatursteuer- und -regelblock (5) mit den Durchtrittsöffnungen (11, 12) der Ventilscheibe (4) kommunizierende Kaltwassereintrittsöffnungen (13, 14) aufweist und die Ventilscheibe (4) zur Temperatursteuerung und -regelung mit dem Temperatursteuer- und -regelblock (5) zusammenwirkt, **dadurch gekennzeichnet, daß** der Temperatursteuer- und -regelblock (5) zwischen dem Kaltwasserrringraum (15) und dem Warmwasserringraum (16) einen Steuer- und Anschlagbund (17) aufweist, der Steuer- und Regelkolben (6) hülsenförmig ausgeführt ist und eine Kaltwassersteuerkante (18) und, mit Abstand (A) zu der Kaltwassersteuerkante (18), eine Warmwassersteuerkante (19) hat und der Steuer- und Anschlagbund (17) eine Breite (B) hat, die geringer ist als der Abstand (A) zwischen den Kalt- und Warmwassersteuerkanten (18, 19), und in den Zwischenraum zwischen der Kaltwassersteuerkante (18) und der Warmwassersteuerkante (19) ragt.

14. Sanitäre Mischbatterie nach Anspruch 12 oder 13, **dadurch gekennzeichnet, daß** die Mischbatterie als Einhebel-Mischbatterie ausgebildet ist.

## Claims

1. A thermostatic valve having a regulatory and control plunger (6); having a temperature regulating and control block (5) which surrounds the regulatory and control plunger (6) radially and is designed in particular as a section of the thermostatic valve housing surrounding radially the regulatory and control plunger (6); having a temperature-dependent regulatory element (7) which works together with the regulatory and control plunger (6); having an actuating element and one or two restoring spring elements (37) which apply a load to the regulatory and control plunger (6) in the direction of the regulatory element (7), whereby to control the temperature, the regulatory and control plunger (6) can be adjusted relative to the temperature regulating and control block (5) into a starting position which determines the temperature and it can be regulated by means of the regulatory element (7) to regulate the temperature, **characterized in that** the restoring spring element(s) (37) is/are arranged between the temperature regulating and control block (5) and the regulatory and control plunger (6), and is/are supported on the temperature regulating and control block (5) on the one hand, preferably on its inside cylindrical surface, and on the other hand on the outer cylindrical surface of the regulatory and control plunger (6).

2. A thermostatic valve according to claim 1, **characterized in that** a stop (28a, 28b) for the restoring spring element (37) is provided on the temperature regulating and control block (5) and on the outer cylindrical surface of the regulatory and control plunger (6).

3. A thermostatic valve according to claim 1 or 2, **characterized in that** the restoring spring element (37) forms a seal between the temperature regulating and control block (5) and the regulatory and control plunger (6), and preferably no other gaskets are provided between the temperature regulating and control block (5) and the regulatory and control plunger (6).

4. A thermostatic valve according to claim 3, **characterized in that** the restoring spring element (37) forms a seal between the cold water ring space (15) and the hot water ring space (16) or it seals the cold water ring space (15) and/or the hot water ring space (16) toward the outside.

5. A thermostatic valve according to one of the preceding claims, **characterized in that** the restoring spring element (37) always works together with at least a slight prestress between the temperature regulating and control block (5) and the regulatory and control plunger (6), regardless of the position of the regulatory and control plunger (6).

6. A thermostatic valve according to one of the preceding claims, **characterized in that** the restoring spring element (37) is designed as a plate spring.

7. A thermostatic valve according to claim 6, **characterized in that** slide faces made of a hardened material for the restoring spring element (37) are provided on the temperature regulating and control block (5) and/or on the regulatory and control plunger (6).

8. A thermostatic valve according to claim 6 or 7, **characterized in that** at least one insert made of a hardened material is provided on the temperature regulating and control block (5) and/or on the regulatory and control plunger (6), and the stop (38a, 38b) and the slide faces are provided on the insert.

9. A thermostatic valve according to one of the preceding claims, **characterized in that** the restoring spring element (37) has an approximately S-shaped section at least in the radial direction in the prestressed state.

10. A thermostatic valve according to one of the preceding claims, **characterized in that** the restoring spring element (37) has a spring (37a) with an approximately meandering design or loop shape in the peripheral direction.

11. A thermostatic valve according to one of the preceding claims, **characterized in that** the restoring spring element (37) has an outer sheathing (37b) preferably made of a plastic or an elastomer.

12. A sanitary mixing faucet having a thermostatic control, a cold water intake (1), a hot water intake (2), a mixed water intake and an operating lever, where a cold water ring space (15) and an adjacent hot water ring space (16) are provided, **characterized in that** the thermostatic control has a thermostatic valve according to one of the preceding claims.

13. A sanitary mixing faucet according to claim 12, having a stationary valve seat disk (3); having a valve disk (4) which is displaceable on the valve seat disk (3) to control the flow, and having a control lever (8) connected to the operating lever, where the valve seat disk (3) has a cold water inlet opening (9) communicating with the cold water intake (1) and a hot water inlet opening (10) communicating with the hot water intake (2); the valve disk (4) has through-passages (11, 12) communicating with the cold water inlet opening (9) of the valve seat disk (3); the temperature regulating and control block (5) has cold water inlet openings (9) communicating with through-passages (11, 12); and the valve disk (4) works together with the temperature regulating and control block (5) for control and regulation of the temperature, **characterized in that** the temperature regulating and control block (5) has a control and stop collar (17) between the cold water ring space (15) and the hot water ring space (16); the regulatory and control plunger (6) is designed in a sleeve shape and has a cold water control edge (18) and, at a distance (A) from the cold water control edge (18), a hot water control edge (19); and the control and stop collar (17) has a width (B) which is smaller than the distance (A) between the hot and cold water control edges (18, 19) and it projects into the interspace between the cold water control edge (18) and the hot water control edge (19).

14. A sanitary mixing faucet according to claim 12 or 13, **characterized in that** the mixing faucet is designed as a single-lever mixing faucet.

## Revendications

1. Soupape à thermostat avec un piston de distribution et de régulation (6), avec un bloc d'asservissement de la température et de thermorégulation (5) entourant dans le sens radial le piston de distribution et de régulation (6), lequel est notamment configuré comme la section de la cage de soupape à thermostat entourant dans le sens radial le piston de distribution et de régulation (6), avec un élément de réglage (7) asservi à la température agissant conjointement avec le piston de distribution et de régulation (6), avec un moyen d'actionnement et avec un ou deux moyens ressorts de rappel (37) sollicitant le piston de distribution et de régulation (6) en direction de l'élément de réglage (7), le piston de distribution et régulation (6) pouvant être amené relativement par rapport au bloc d'asservissement de la température et de thermorégulation (5) et à des fins d'asservissement de la température dans une position initiale déterminant la température, et réglé au moyen de l'élément de réglage (7) à des fins de thermorégulation, **caractérisé en ce que** le ou les moyens ressorts de rappel (37) sont disposés entre le bloc d'asservissement de la température et de thermorégulation (5) et le piston de distribution et de régulation (6) et s'appuient sur le bloc d'asservissement de température et de thermorégulation (5), de préférence sur son enveloppe intérieure d'une part et sur l'enveloppe extérieure du piston de distribution et de régulation (6) d'autre part.

2. Soupape à thermostat selon la revendication 1 **caractérisée en ce qu'**on prévoit une butée (28a,38b) pour le moyen ressort de rappel (37) respectivement sur le bloc d'asservissement à la température et de thermorégulation (5) et sur la surface de l'enveloppe extérieure du piston de distribution et régulation (6).

3. Soupape à thermostat selon la revendication 1 ou 2 **caractérisée en ce que** le moyen ressort de rappel (37) assure l'étanchéité entre le bloc d'asservissement à la température et de thermorégulation (5) et le piston de distribution et régulation (6) et **en ce que** de préférence, on ne prévoit aucune autre garniture d'étanchéité entre le bloc d'asservissement à la température et de thermorégulation (5) et le piston de distribution et régulation (6).

4. Soupape à thermostat selon la revendication 3 **caractérisée en ce que** le moyen ressort de rappel (37) assure l'étanchéité entre l'espace annulaire pour eau froide (15) et l'espace annulaire pour eau chaude (16) ou assure l'étanchéité de l'espace annulaire pour eau froide (15) et/ou de l'espace annulaire pour eau chaude (16) vers l'extérieur.

5. Soupape à thermostat selon l'une des revendications précédentes **caractérisée en ce que** le moyen ressort de rappel (37) agit toujours avec au moins une faible précontrainte entre le bloc d'asservissement de la température et de thermorégulation (5) et le piston de distribution et de régulation (6), indépendamment de la position de ce dernier.

6. Soupape à thermostat selon l'une des revendications précédentes **caractérisée en ce que** le moyen ressort de rappel (37) est configuré comme une rondelle Belleville.

7. Soupape à thermostat selon la revendication 6 **caractérisée en ce que** des surfaces de glissement en matériau trempé sont prévues pour le moyen ressort de rappel (37) sur le bloc d'asservissement de la température et de thermorégulation (5) et/ou le piston de distribution et régulation (6).

8. Soupape à thermostat selon la revendication 6 ou 7 **caractérisée en ce que** sur le bloc d'asservissement de la température et de thermorégulation (5) et/ou le piston de distribution et régulation (6), on prévoit à chaque fois au moins un insert en matériau trempé et que la butée (38a, 38b) et les surfaces de glissement sont aménagées sur l'insert.

9. Soupape à thermostat selon l'une des revendications précédentes **caractérisée en ce que** le moyen ressort de rappel (37) présente dans le sens radial et à l'état précontraint, une section plus ou moins en forme de S.

10. Soupape à thermostat selon l'une des revendications précédentes **caractérisée en ce que** le moyen ressort de rappel (37) présente un ressort (37a) plus ou moins en forme de boucle ou de méandre en direction circonférentielle.

11. Soupape à thermostat selon l'une des revendications précédentes **caractérisée en ce que** le moyen ressort de rappel (37) présente une enveloppe extérieure (37b), de préférence en matière plastique ou élastomère.

12. Mitigeur sanitaire pourvu d'une commande par thermostat, d'une arrivée d'eau froide (1), d'une arrivée d'eau chaude (2), d'une sortie d'eau mixte et d'un levier de manoeuvre, un espace annulaire pour eau froide (15) et un espace annulaire pour eau chaude (16) contigu étant prévus, **caractérisé en ce que** la commande par thermostat prévoit une soupape à thermostat selon l'une des revendications précédentes.

13. Mitigeur sanitaire selon la revendication 12, avec une rondelle de siège de soupape (3) fixe, avec un disque de soupape (4) pouvant coulisser sur la rondelle de siège (3) à des fins de commande du débit et avec un levier de commande (8) relié au levier de manoeuvre, la rondelle de siège de soupape (3) présentant un orifice d'entrée pour eau froide (9) relié à l'arrivée d'eau froide (1) et un orifice d'entrée pour eau chaude (10) relié à l'arrivée d'eau chaude (2), le disque de soupape (4) présentant des orifices de passage (11, 12) communiquant avec 1' orifice d'entrée pour eau froide (9) de la rondelle de siège (3), le bloc d'asservissement de température et de thermorégulation (5) présentant des orifices d'entrée d'eau froide (13, 14) communiquant avec les orifices de passage (11, 12) du disque de soupape (4) et ce dernier (4) agissant conjointement avec le bloc d'asservissement de température et de thermorégulation (5) à des fins d'asservissement et de régulation de la température, **caractérisé en ce que** le bloc d'asservissement de la température et de thermorégulation (5) présente entre les espaces annulaires pour eau froide (15) et eau chaude (16), un collet de distribution et de butée (17), le piston de distribution et régulation (6) est en forme de douille et présente une rampe hélicoïdale pour eau froide (18) et, à distance (A) de celle-ci (18), une rampe hélicoïdale pour eau chaude (19) et **en ce que** le collet de distribution et de butée (17) est d'une largeur (B) inférieure à la distance (A) entre les deux rampes hélicoïdales (18, 19) et fait saillie dans l'espace intermédiaire entre la rampe hélicoïdale pour eau froide (18) et celle pour eau chaude (19).

14. Mitigeur sanitaire selon la revendication 12 ou 13 **caractérisé en ce qu'**il est conçu comme un mitigeur à levier unique.
